# EUROPÄISCHE PATENTSCHRIFT

(11) **EP 1 209 343 B1**
(45) Veröffentlichungstag und Bekanntmachung des Hinweises auf die Patenterteilung: **09.08.2006**
(21) Anmeldenummer: 01127826.4
(22) Anmeldetag: 22.11.2001
(51) Int. Cl.: F02F 7/00, F02F 11/00

(54) **Verschlussdeckel für ein Gehäuse**
Cover for a housing
Couvercle pour un bâtiment

(30) Priorität: 22.11.2000 DE 10058177
(43) Veröffentlichungstag der Anmeldung: 29.05.2002
(73) Patentinhaber: Carl Freudenberg KG, 69469 Weinheim (DE); Société Mécaplast, 98014 Monaco Cédex (MC)
(72) Erfinder: Baudry Alain, 52360 Neuilly (FR); Leveque Bernard, 06190 Roquebrune Cap-Martin (FR); Meignan David, 03600 Nice (FR); Pillas Thomas, 52200 Langres (FR)

(56) Entgegenhaltungen:
- WO-A-95/15451
- DE-A- 4 445 610
- DE-C- 441 710
- DE-U- 29 603 159
- US-A- 2 298 408

## Beschreibung

Die Erfindung betrifft einen Verschlussdeckel für ein Gehäuse.

### Stand der Technik

Derartige Verschlussdeckel sind allgemein bekannt und gelangen beispielsweise zum Verschließen von Kurbelwellen-Gehäusen von Verbrennungskraftmaschinen zur Anwendung. In Verschlussdeckeln, die aus polymeren Werkstoffen bestehen, sind hülsenförmige metallische Inserts angeordnet, die als Drehmomentbegrenzer zum Schutz des Verschlussdeckels ausgebildet und von Befestigungsschrauben durchdrungen sind. Die Inserts sind unlösbar in den Verschlussdeckel eingegossen. Die Inserts berühren mit einer ihrer Stirnseiten das Gehäuse und mit ihrer anderen Stirnseite den Schraubenkopf der Schrauben.

Bei in Verschlussdeckel eingegossenen Inserts ist von Nachteil, dass zur Herstellung spezielle Aufnahmen für diese Inserts im Werkzeug vorzusehen sind, dass die Inserts in einem separaten Arbeitsgang in das Werkzeug eingelegt werden müssen und dass die eingegossenen Inserts nicht wieder verwendbar sind.

### Darstellung der Erfindung

Der Erfindung liegt die Aufgabe zugrunde, einen Gehäuseverschlussdeckel der eingangs genannten Art derart weiterzuentwickeln, dass dieser einfach vom Gehäuse demontierbar ist und dass der Gehäuseverschlussdeckel einfach und kostengünstig herstellbar ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Verschlussdeckel für ein Gehäuse vorgesehen, umfassend eine Aufnahme die mit einem Insert mit Innengewinde in Eingriff bringbar ist, wobei sich das Innengewinde des mit der Aufnahme in Eingriff befindlichen Inserts koaxial zur Montage- und Demontagerichtung des Verschlussdeckels erstreckt und wobei in das Innengewinde zur Demontage des Verschlussdeckels vom Gehäuse ein sich am Gehäuse abstützender, im Wesentlichen schraubenförmiger Abzieher einschraubbar ist. Hierbei ist von Vorteil, dass der Verschlussdeckel durch seine integrierte Abziehvorrichtung, bestehend aus dem Insert mit Innengewinde und dem Abzieher, auch dann mit geringem Kraftaufwand einfach vom Gehäuse gelöst werden kann, wenn der Verschlussdeckel am Gehäuse, beispielsweise durch äußere Verunreinigungen und/oder Dichtungswerkstoffe, zwischen dem Verschlussdeckel und dem Gehäuse, besonders fest anhaftet. Diese zumeist sehr feste Verbindung wird bei der Demontage des Verschlussdeckels vom Gehäuse durch die in den Verschlussdeckel integrierte Abziehvorrichtung mit geringem Kraftaufwand aufgebrochen. Außerdem ist von Vorteil, dass die Inserts nur im Reparaturfall mit der Aufnahme verbunden wird. Die Serienlieferung des Verschlussdeckels kann ohne das Insert erfolgen. Die Ersatzteillieferung enthält dann einen neuen Verschlussdeckel und ein Insert, das zur Demontage des alten Verschlussdeckels erforderlich ist. Der neue Verschlussdeckel wird dann ohne das Insert montiert.

Besonders vorteilhaft ist es, wenn die Aufnahme und das Insert zerstörungsfrei lösbar miteinander in Eingriff bringbar sind. Im Anschluss an die Verwendung des Verschlussdeckels können die Inserts zerstörungsfrei von/aus der Aufnahme entfernt und mit der Aufnahme eines neuen Verschlussdeckels verbunden werden. Für Anwendungsfälle, in denen eine Abziehvorrichtung zur Demontage des Verschlussdeckels vom Gehäuse nicht erforderlich ist, braucht demgegenüber kein Insert mit der Aufnahme verbunden zu werden. Dadurch, dass das Insert nur bedarfsweise und erst nach der Herstellung des Verschlussdeckels mit der Aufnahme verbunden wird, ist die Herstellung des Verschlussdeckels in fertigungstechnischer und wirtschaftlicher Hinsicht einfach und kostengünstig durchführbar. Die Werkzeuge müssen keine Ausnehmungen zur Aufnahme der Inserts aufweisen. Inserts kommen immer nur dann zur Anwendung, wenn die Abziehvorrichtung für die Demontage des Verschlussdeckels vom Gehäuse erforderlich ist. Die Inserts sind nach dem Gebrauch des Verschlussdeckels wieder verwendbar.

Die Aufnahme und das Insert können kraft- und/oder formschlüssig miteinander in Eingriff bringbar sein. Ein kraftschlüssige Verbindung kann beispielsweise dadurch erfolgen, dass das Insert in die Aufnahme eingepresst ist. Zusätzlich oder alternativ besteht die Möglichkeit, die Aufnahme beispielsweise mit Rasthaken zu versehen, die das Insert formschlüssig umgreifen. Generell ist es für die Handhabung des Verschlussdeckels von Vorteil, wenn die Aufnahme und das Insert derart miteinander verbunden sind, dass die Verbindung selbsttätig aufrecht erhalten wird, unabhängig davon, in welcher Position der Verschlussdeckel montiert wird. Ein unerwünschtes Herausfallen des Inserts aus der Aufnahme wird dadurch vermieden.

Bevorzugt bildet die Aufnahme einen einstückig und materialeinheitlichen Bestandteil des Verschlussdeckels. Durch den teilearmen Aufbau ist die Handhabung des Verschlussdeckels vereinfacht.

Die Aufnahme kann im Wesentlichen klammerförmig ausgebildet sein und zumindest eine Durchbrechung aufweisen, die konzentrisch zum Innengewinde des montierten Inserts angeordnet ist, wobei der in das Innengewinde eingeschraubte Abzieher die Durchbrechung durchdringt. Durch Einschieben des Inserts in die Aufnahme werden diese beiden Teile miteinander verbunden.

Der Verschlussdeckel besteht bevorzugt aus einem polymeren Werkstoff. Hierbei ist von Vorteil, dass der Verschlussdeckel nur ein geringes Gewicht aufweist und dadurch, im Vergleich zu Verschlussdeckeln aus metallischen Werkstoffen, einfacher zu handhaben ist. Außerdem ist von Vorteil, dass ein Verschlussdeckel aus polymerem Werkstoff rostfrei ist.

Das Insert besteht bevorzugt aus einem metallischen Werkstoff. Auch bei stark am Gehäuse anhaftenden Verschlussdeckeln können entsprechend große Kräfte zum Lösen des Verschlussdeckels vom Gehäuse mittels des Inserts übertragen werden, ohne dass das Innengewinde des Inserts einem messbarem Verschleiß unterliegt. Inserts aus metallischem Werkstoff können dadurch nahezu beliebig oft wieder verwendet werden.

Der zuvor beschriebene Verschlussdeckel hat sich als besonders vorteilhaft bewährt, wenn dieser ein Geberrad zur Erfassung von Drehzahl und/oder Drehwinkel einer im Gehäuse rotierenden Welle umfasst, wobei das Geberrad und die Welle durch eine Presspassung drehfest verbunden sind. Das Geberrad ist dem Verschlussdeckel relativ verdrehbar zugeordnet. In einem solchen Anwendungsfall wird das Geberrad bei Betätigung der Abziehvorrichtung zusammen mit dem Verschlussdeckel abgezogen, wobei gleichzeitig das Geberrad von der Welle und der Verschlussdeckel vom Gehäuse entfernt werden.

Der erfindungsgemäße Verschlussdeckel wird nachfolgend anhand der Figuren 1 bis 6 weiter erläutert. Diese zeigen jeweils in schematischer Darstellung:

### Kurzbeschreibung der Zeichnungen

- Fig. 1: ein Ausführungsbeispiel eines erfindungsgemäßen Verschlussdeckels in einer Ansicht von vorn,
- Fig. 2: einen Ausschnitt aus dem Verschlussdeckel gemäß Fig. 1, geschnitten entlang der Linie A - A,
- Fig. 3: den Verschlussdeckel aus Fig. 1 in perspektivischer Darstellung von oben,
- Fig. 4: den Verschlussdeckel aus Fig. 3 in einer Ansicht von oben,
- Fig.5: ein weiteres Ausführungsbeispiel eines Verschlussdeckels, ähnlich dem Ausführungsbeispiel aus Fig. 3 mit abweichend gestalteter Aufnahme,
- Fig. 6: eine Draufsicht auf das Ausführungsbeispiel aus Fig. 5.

### Ausführung der Erfindung

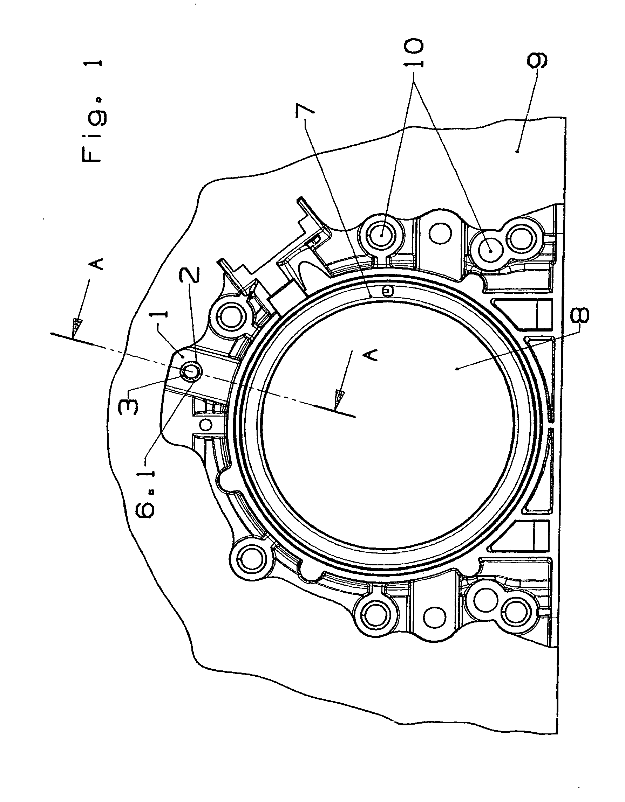

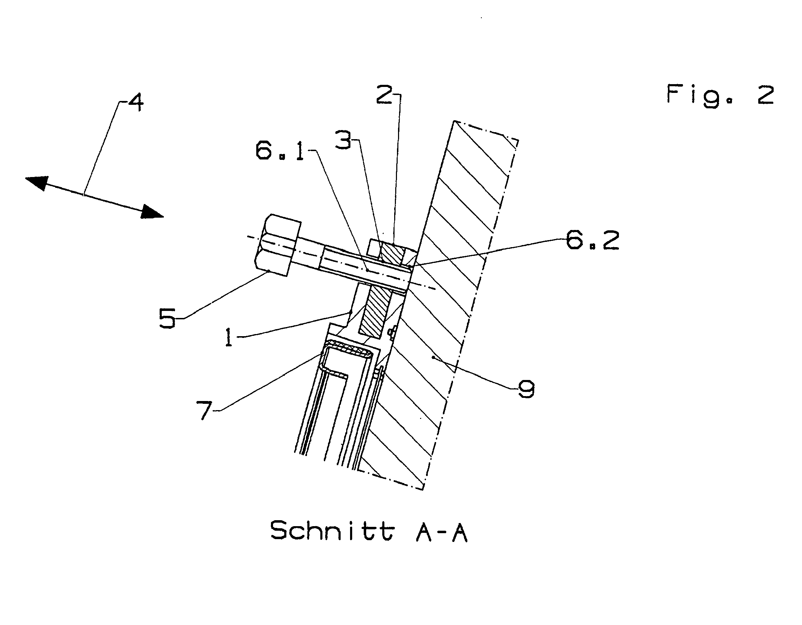

In Fig. 1 ist ein erstes Ausführungsbeispiel eines Verschlussdeckels für ein Gehäuse 9 gezeigt. Das Gehäuse 9 ist in diesem Ausführungsbeispiel als Kurbelwellen-Gehäuse einer Verbrennungskraftmaschine ausgebildet. Das Gehäuse 9 wird dabei von der als Kurbelwelle ausgebildeten Welle 8 durchdrungen, wobei das Geberrad 7 auf der dem Gehäuse 9 abgewandten Seite des Verschlussdeckels drehbeweglich zum Verschlussdeckel angeordnet und drehfest auf die Welle 8 aufgepresst ist. Zur Erfassung von Drehzahl und/oder Drehwinkel der Welle 8 ist das Geberrad 7 an einem hier nicht dargestellten, mit dem Verschlussdeckel verbundenen Sensor vorbeiführbar.

Neben den üblichen Bohrungen 10 zur Befestigung des Verschlussdeckels am Gehäuse 9 mit hier nicht dargestellten Schrauben, weist der Verschlussdeckel eine Aufnahme 1 auf, in die ein separat erzeugtes und mit einem Innengewinde 3 versehenes Insert 2 einfügbar ist. Das Innengewinde 3 erstreckt sich koaxial zur Montage und Demontagerichtung 4 des Verschlussdeckels.
In Fig. 1 ist der Verschlussdeckel während seiner bestimmungsgemäßen Verwendung an einem Gehäuse 9 montiert dargestellt.

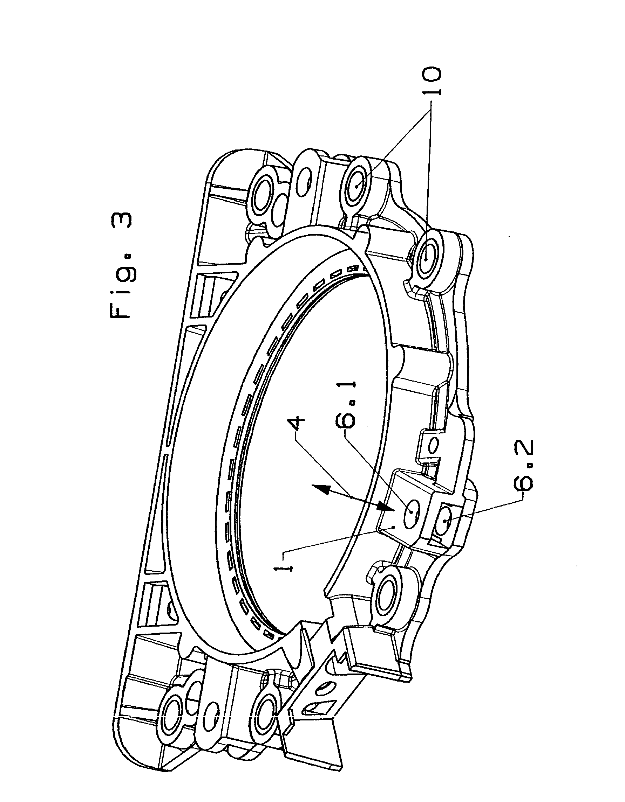

Das Insert 2 mit dem Innengewinde 3 ist in der Aufnahme 1 des Verschlussdeckels angeordnet und wird beispielsweise durch eine leichte elastische Vorspannung in dieser gehalten. Die Aufnahme 1 ist klammerförmig ausgebildet und weist, wie in Fig. 2 dargestellt, zwei Durchbrechungen 6.1, 6.2 auf, die sich axial beiderseits stirnseitig an das Innengewinde 3 anschließen.

Der Verschlussdeckel und die einstückig mit dem Verschlussdeckel ausgebildete Aufnahme 1 bestehen aus einem polymeren Werkstoff.

Auf die Welle 8 ist das Geberrad 7 aufgepresst, wobei die Welle 8 und das Geberrad 7 drehfest miteinander verbunden sind. Wird der Verschlussdeckel vom Gehäuse 9 demontiert, wird durch den Abzieher 5 rechtzeitig das Geberrad 7 von der Welle 8 abgezogen.

Das Insert 2 zur Demontage des Verschlussdeckels wird nur im Reparaturfall in die Aufnahme eingelegt, wobei der neue Verschlussdeckel ohne Insert 2 montiert wird. Die Ersatzteillieferung für den Verschlussdeckel kann ein Insert 2 und den Verschlussdeckel selbst enthalten.

In Fig. 2 ist ein Ausschnitt aus Fig. 1 entlang des Schnitts A - A gezeigt.

Zur Demontage des Verschlussdeckels vom Gehäuse 9 wird der Abzieher 5, der in diesem Ausführungsbeispiel durch eine Schraube gebildet ist, in das Innengewinde 3 des Inserts 2 eingeschraubt und durchdringt dabei die beiden Durchbrechung 6.1, 6.2 der Aufnahme 1. Nachdem der Abzieher 5 die dem Verschlussdeckel zugewandte Oberfläche des Gehäuses 9 anliegend berührt, hebt sich der Verschlussdeckel bei weiterem Hineindrehen des Abziehers 5 in das Innengewinde 3 der Verschlussdeckel vom Gehäuse 9 ab. Wird der demontierte Verschlussdeckel beispielsweise durch einen neuen Verschlussdeckel ersetzt, kann das Insert 2 aus dem alten Verschlussdeckel zerstörungsfrei herausgenommen und in die Aufnahme 1 des neuen Verschlussdeckels eingesetzt werden.

In Fig. 3 ist das Ausführungsbeispiel aus Fig. 1 in perspektivischer Darstellung gezeigt. Die Aufnahme 1 mit den beiden Durchbrechung 6.1, 6.2 ist einstückig und materialeinheitlich mit dem Verschlussdeckel ausgeführt, wobei die Aufnahme 1 das hier nicht dargestellte Insert 2 mit Ausnahme seiner Oberseite vollständig umschließt.

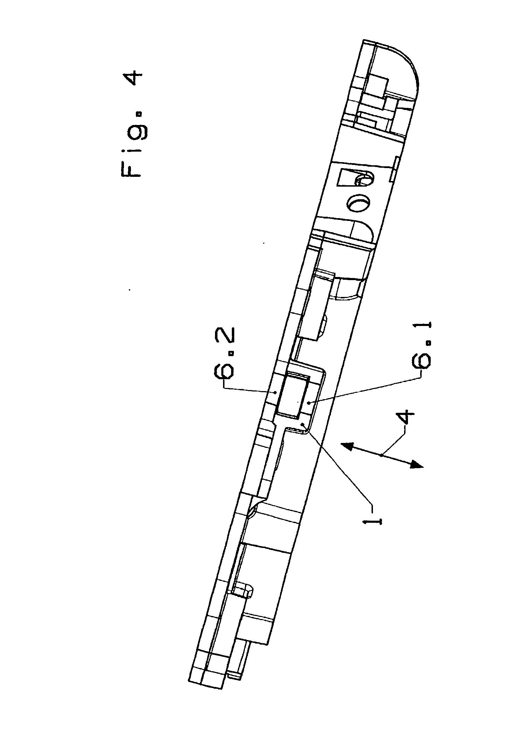

In Fig. 4 ist der Verschlussdeckel aus Fig. 3 in einer Draufsicht gezeigt. Das Insert 2 wird im Anschluss an die Herstellung des Verschlussdeckels von oben in die Aufnahme 1 eingesetzt.

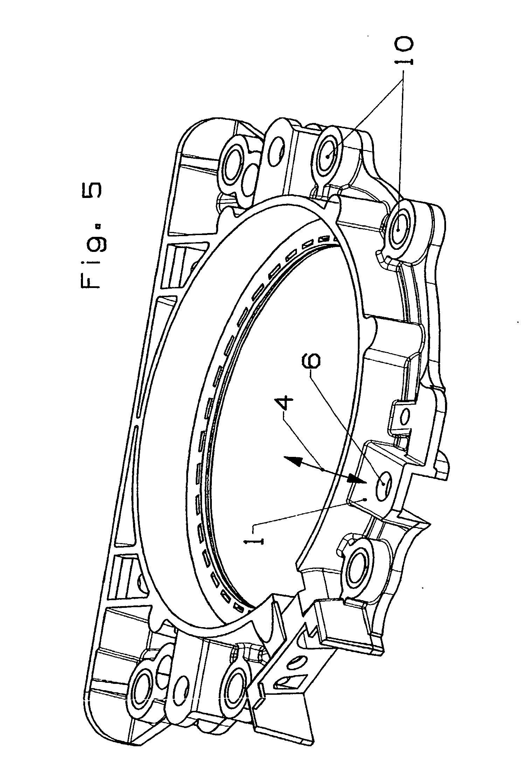

In Fig. 5 ist ein zweites Ausführungsbeispiel eines Verschlussdeckels gezeigt, das sich nur im Bereich der Aufnahme 1 von dem zuvor beschriebenen Ausführungsbeispiel unterscheidet. Das hier nicht dargestellte Insert 2 ist von einer U-förmig ausgebildeten, axial in Richtung des Gehäuses 9 offenen Aufnahme 1 umschlossen. Das hier nicht dargestellte Insert 2 berührt bei montiertem Verschlussdeckel in axialer Richtung einerseits die Aufnahme 1 und in axialer Richtung andererseits das hier nicht dargestellt Gehäuse 9.

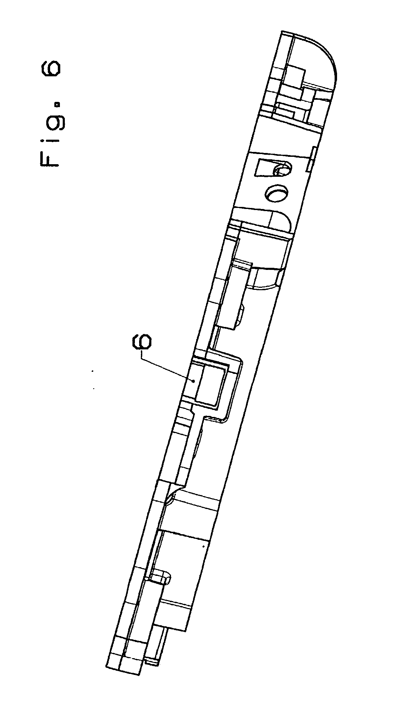

In Fig. 6 ist das Ausführungsbeispiel aus Fig. 5 von oben gezeigt.

## Patentansprüche

1. Verschlussdeckel und Insert mit Innengewinde für ein Gehäuse (9), umfassend zumindest eine Aufnahme (1), die mit dem Insert (2) mit Innengewinde (3) in Eingriff bringbar ist, wobei sich das Innengewinde (3) des mit der Aufnahme in Eingriff befindlichen Inserts koaxial zur Montage- und Demontagerichtung (4) des Verschlussdeckels erstreckt und wobei in das Innengewinde (3) zur Demontage des Verschlussdeckels vom Gehäuse (9) ein sich am Gehäuse (9) abstützender, im Wesentlichen schraubenförmiger Abzieher (5) einschraubbar ist.

2. Verschlussdeckel nach Anspruch 1, **dadurch gekennzeichnet, dass** die Aufnahme (1) und das Insert (2) zerstörungsfrei lösbar miteinander in Eingriff bringbar sind.

3. Verschlussdeckel nach einem der Ansprüche 1 oder 2, **dadurch gekennzeichnet, dass** die Aufnahme (1) und das Insert (2) kraft- und/oder formschlüssig miteinander in Eingriff bringbar sind.

4. Verschlussdeckel nach einem der Ansprüche 1 bis 3, **dadurch gekennzeichnet, dass** die Aufnahme (1) einen einstückig und materialeinheitlichen Bestandteil des Verschlussdeckels bildet.

5. Verschlussdeckel nach einem der Ansprüche 1 bis 4, **dadurch gekennzeichnet, dass** die Aufnahme (1) im Wesentlichen klammerförmig ausgebildet ist und zumindest eine Durchbrechung (6) aufweist, die konzentrisch zum Innengewinde (3) des montierten Inserts (2) angeordnet ist und dass der in das Innengewinde (3) eingeschraubte Abzieher (5) die Durchbrechung (6) durchdringt.

6. Verschlussdeckel nach einem der Ansprüche 1 bis 5, **dadurch gekennzeichnet, dass** der Verschlussdeckel aus einem polymeren Werkstoff besteht.

7. Verschlussdeckel nach einem der Ansprüche 1 bis 6, **dadurch gekennzeichnet, dass** das Insert (2) aus einem metallischen Werkstoff besteht.

8. Verschlussdeckel nach einem der Ansprüche 1 bis 7, umfassend ein Geberrad (7) zur Erfassung von Drehzahl und/oder Drehwinkel einer im Gehäuse (9) rotierenden Welle (8), wobei das Geberrad (7) und die Welle (8) durch eine Presspassung drehfest verbunden sind.

## Claims

1. Cover and insert with an internal thread for a housing (9), comprising at least one receptacle (1) which can be brought into engagement with the insert (2) with the internal thread (3), with the internal thread (3) of the insert, which is in engagement with the receptacle, extending coaxially to the installation and removal direction (4) of the cover, and with an essentially screw-shaped puller (5) which is supported on the housing (9) being screwable into the internal thread (3) for removing the cover from the housing (9).

2. Cover according to Claim 1, **characterized in that** the receptacle (1) and the insert (2) can be brought into engagement with each other in a manner such that they can be detached without being destroyed.

3. Cover according to either of Claims 1 and 2, **characterized in that** the receptacle (1) and the insert (2) can be brought into engagement with each other in a frictional and/or interlocking manner.

4. Cover according to one of Claims 1 to 3, **characterized in that** the receptacle (1) forms a constituent part of the cover that is integral with the same and is of the same material.

5. Cover according to one of Claims 1 to 4, **characterized in that** the receptacle (1) is designed essentially in the form of a clamp and has at least one aperture (6) which is arranged concentrically with the internal thread (3) of the fitted insert (2), and **in that** the puller (5) which is screwed into the internal thread (3) penetrates the aperture (6).

6. Cover according to one of Claims 1 to 5, **characterized in that** the cover consists of a polymeric material.

7. Cover according to one of Claims 1 to 6, **characterized in that** the insert (2) consists of a metallic material.

8. Cover according to one of Claims 1 to 7, comprising a transmitter wheel (7) for detecting the rotational speed and/or angle of rotation of a shaft (8) rotating in the housing (9), the transmitter wheel (7) and the shaft (8) being connected in a rotationally fixed manner by a press fit.

## Revendications

1. Couvercle et insert avec un filet intérieur pour un boîtier (9), comprenant au moins un logement (1), qui peut être mis en prise avec l'insert (2) avec le filet intérieur (3), dans lequel le filet intérieur (3) de l'insert se trouvant en prise avec le logement s'étend coaxialement à la direction de montage et de démontage (4) du couvercle et dans lequel un extracteur (5) sensiblement en forme de vis peut être vissé dans le filet intérieur (3) pour le démontage du couvercle du boîtier (9).

2. Couvercle selon la revendication 1, **caractérisé en ce que** le logement (1) et l'insert (2) peuvent être mis en prise l'un avec l'autre de façon séparable sans destruction.

3. Couvercle selon l'une des revendications 1 ou 2, **caractérisé en ce que** le logement (1) et l'insert (2) peuvent être mis en prise l'un avec l'autre en complémentarité de force et/ou de forme.

4. Couvercle selon l'une quelconque des revendications 1 à 3, **caractérisé en ce que** le logement (1) forme un composant en une seule pièce et en une seule matière du couvercle.

5. Couvercle selon l'une quelconque des revendications 1 à 4, **caractérisé en ce que** le logement (1) est réalisé sensiblement en forme de griffe et présente au moins un passage (6), qui est concentrique au filet intérieur (3) de l'insert monté (2) et **en ce que** l'extracteur (5) vissé dans le filet intérieur (3) traverse le passage (6).

6. Couvercle selon l'une quelconque des revendications 1 à 5, **caractérisé en ce que** le couvercle se compose d'une matière polymère.

7. Couvercle selon l'une quelconque des revendications 1 à 6, **caractérisé en ce que** l'insert (2) se compose d'une matière métallique.

8. Couvercle selon l'une quelconque des revendications 1 à 7, comprenant une roue de capteur (7) pour la détection de la vitesse de rotation et/ou de l'angle de rotation d'un arbre (8) tournant dans le boîtier (9), dans lequel la roue de capteur (7) et l'arbre (8) sont assemblés de façon solidaire en rotation par un ajustement serré.
